Europäisches Patentamt

European Patent Office

Office européen des brevets

(11) Veröffentlichungsnummer: **0 218 078**

**A1**

(12) ## EUROPÄISCHE PATENTANMELDUNG

(21) Anmeldenummer: 86111847.9

(22) Anmeldetag: 27.08.86

(51) Int. Cl.⁴: **F16H 55/48 , F16F 15/12**

(30) Priorität: 08.10.85 DE 3535859

(43) Veröffentlichungstag der Anmeldung:
**15.04.87 Patentblatt 87/16**

(84) Benannte Vertragsstaaten:
**DE FR GB IT**

(71) Anmelder: **INA Wälzlager Schaeffler KG**
**Industriestrasse 1-3 Postfach 1220**
**D-8522 Herzogenaurach(DE)**

(72) Erfinder: **Röhrig, Harald, Dipl.-Ing.**
**Argelanderstrasse 9**
**D-5300 Bonn(DE)**

(74) Vertreter: **Klug, Horst, Dipl.-Ing. (FH)**
**c/o INA Wälzlager Schaeffler KG Postfach 12**
**20**
**D-8522 Herzogenaurach(DE)**

(54) **Riemenscheibe mit Dämpfungselement.**

(57) Eine Riemenscheibe (1), bestehend aus einem die Lauffläche (2) für den Riemen tragenden äußeren Kranz (3) und einer konzentrisch in diesem angeordneten Nabe (4) sowie einem drehfest mit beiden verbundenen Dämpfungselement (5), wobei der Kranz (3) in radialer und axialer Richtung gegenüber der Nabe (4) starr abgestützt ist, während er in Umfangsrichtung gegenüber der Nabe (4) winkelbeweglich ist, und wobei der Kranz (3) und die Nabe (4) aus einem harten und das Dämpfungselement (5) aus einem weicheren polymeren Werkstoff bestehen, ist aus wenigen Teilen kostengünstig herstellbar und macht ein Wälzlager zwischen Kranz (3) und Nabe (4) dadurch überflüssig, daß der Kranz (3) durch blattfederartige Rippen (6) einstückig mit der Nabe (4) verbunden ist, die ihr geringstes Biegewiderstandsmoment um parallel zur Längsachse der Riemenscheibe (1) verlaufende Achsen aufweisen.

Fig. 1

## Riemenscheibe mit Dämpfungselement

Die Erfindung betrifft eine Riemenscheibe, bestehend aus einem die Lauffläche für den Riemen tragenden äußeren Kranz und einer konzentrisch in diesem angeordneten Nabe sowie einem drehfest mit beiden verbundenen Dämpfungselement, wobei der Kranz in radialer und axialer Richtung gegenüber der Nabe starr abgestützt ist, während er in Umfangsrichtung gegenüber der Nabe winkelbeweglich ist, und wobei der Kranz und die Nabe aus einem harten und das Dämpfungselement aus einem weicheren polymeren Werkstoff bestehen.

Derartige Riemenscheiben werden z. B. für den Antrieb von Nebenaggregaten von Verbrennungskraftmaschinen in Kraftfahrzeugen verwendet, wobei das Dämpfungselement dazu dient, die Übertragung von Drehschwingungen zwischen Nabe und Kranz zu vermeiden. Zu diesem Zweck ist es erforderlich, daß der Kranz in Umfangsrichtung gegenüber der Nabe winkelbeweglich ist. Durch die in axialer und radialer Richtung starre Abstützung gegenüber der Nabe wird gewährleistet, daß die Riemenscheibe in radialer und axialer Richtung in gleichem Maße wie eine herkömmliche Riemenscheibe ohne Dämpfungselement belastbar ist und Taumelbewegungen des Kranzes gegenüber der Nabe nicht auftreten.

Bei einer aus der DE-OS 34 02 001 bekannten Riemenscheibe der eingangs genannten Art wird der Kranz in axialer und radialer Richtung gegenüber der Nabe durch einen scheibenförmigen Steg starr abgestützt.

Um die zur Drehschwingungsdämpfung erforderliche Winkelbeweglichkeit des Kranzes gegenüber der Nabe zu ermöglichen, ist zwischen dem Steg und der Nabe ein Wälzlager angeordnet

Die bekannte Riemenscheibe funktioniert durchaus zufriedenstellend, ist jedoch mit dem Nachteil behaftet, daß die eigentliche Riemenscheibe aus wenigstens zwei getrennten Bauteilen besteht, zwischen denen zusätzlich ein Wälzlager angeordnet ist. Sowohl infolge der zweiteiligen Ausführung der Riemenscheibe als auch infolge des für die Funktion der Riemenscheibe erforderlichen Wälzlagers sind die Herstellungskosten für die bekannte Riemenscheibe beträchtlich.

Der Erfindung liegt die Aufgabe zugrunde, eine Riemenscheibe der eingangs genannten Art zu - schaffen, die aus möglichst wenigen Teilen besteht, kostengünstig herstellbar ist und ein Wälzlager zwischen Kranz und Nabe überflüssig macht.

Diese Aufgabe wird nach der Erfindung dadurch gelöst, daß der Kranz durch blattfederartige Rippen einstückig mit der Nabe verbunden ist, die ihr geringstes Biegewiderstandsmoment um parallel zur Längsachse der Riemenscheibe verlaufende Achsen aufweisen.

Durch diese Maßnahme ist eine in axialer und radialer Richtung starre Abstützung des Kranzes gegenüber der Nabe gegeben, wobei aufgrund der blattfederartigen Ausbildung der Rippen, die ihr geringstes Biegewiderstandsmoment um zur Längsachse der Riemenscheibe parallele Achsen aufweisen, in Umfangsrichtung Winkelbewegungen des Kranzes relativ zur Nabe möglich sind, wodurch das Dämpfungselement wirksam werden kann.

Nach einer Variante der Erfindung ist das Dämpfungselement im wesentlichen ringförmig ausgebildet und die Rippen sind auf wenigstens einer Seite des Dämpfungselementes neben diesem angeordnet. Durch diese Ausbildung gestaltet sich die Herstellung der Riemenscheibe sehr einfach, da es möglich ist, das Dämpfungselement in eine Spritzform einzulegen und zur Bildung der eigentlichen Riemenscheibe mit dem härteren polymeren Werkstoff zu umgeben. Bei geeigneter Materialwahl ergibt sich dabei eine stoffschlüssige Verbindung zwischen dem Kranz und dem Dämpfungselement bzw. dem Dämpfungselement und der Nabe. Falls die jeweiligen Werkstoffe die Bildung einer solchen Verbindung nicht begünstigen, kann das Dämpfungselement vor dem Umspritzen an seinen entsprechenden Flächen mit einem Haftvermittler behandelt werden. Bei Verwendung einer Spritzform mit vergrößerbarem Formhohlraum ist es sogar möglich, zunächst zur Bildung des Dämpfungselements den weicheren polymeren Werkstoff in die Form einzubringen und unmittelbar anschließend den Formhohlraum zur Bildung der eigentlichen Riemenscheibe zu vergrößern und den härteren polymeren Werkstoff einzubringen, wobei sich die beiden polymeren Werkstoffe an ihren Berührflächen im warmplastischen Zustand verbinden.

Für Anwendungfälle, in denen sehr hohe Kräfte übertragen werden müssen, sieht eine Ausführungsform der Erfindung vor, daß in der Bohrung der Nabe eine metallische Armierungshülse vorgesehen ist, welche vorzugsweise formschlüssig durch Umspritzen mit der Riemenscheibe verbunden ist. Dabei kann nach einer weiteren Ausführung der Erfindung vorgesehen sein, daß sich die Armierungshülse über die gesamte Länge der Nabe erstreckt. Es ist dann möglich, eine drehfeste Verbindung der Riemenscheibe mit einer Welle dadurch zu schaffen, daß die Stirnflächen der Armierungshülse zwischen zwei Wellenabsätzen oder dergleichen reibschlüssig eingespannt werden.

Nach einer Variante der Erfindung ist vorgesehen, daß die Nabe und/oder die Armierungshülse wenigstens eine, gegebenenfalls gemeinsame Durchbrechung aufweisen, durch welche der weichere polymere Werkstoff in die Bohrung der Armierungshülse tritt, wobei infolge der Anwesenheit des weicheren polymeren Werkstoffs in der Bohrung der Armierungshülse Toleranzen des Wellendurchmessers überbrückt werden können. Nach Ausführungen der Erfindung kann dabei der weichere polymere Werkstoff entweder die gesamte Bohrungswandung der Armierungshülse bedecken oder durch wenigstens drei Durchbrechungen zur Bildung von Zentriernasen in die Bohrung der Armierungshülse treten.

Eine Ausführungsform der Erfindung sieht für Fälle, in denen eine stoffschlüssige Verbindung zwischen dem weicheren und dem harten polymeren Werkstoff nicht herstellbar ist oder eine zu geringe Festigkeit aufweist vor, daß die Trennfläche zwischen Kranz und Dämpfungselement und/oder die Trennfläche zwischen Dämpfungselement und Nabe derart unrund ausgebildet ist, daß zwischen den jeweiligen Teilen eine formschlüssige Verdrehsicherung besteht.

Schließlich kann nach einer letzten Ausführung der Erfindung vorgesehen sein, daß die Trennfläche zwischen Kranz und Dämpfungselement und/oder die Trennfläche zwischen Dämpfungselement und Nabe derart ausgebildet ist, daß die jeweiligen Teile in axialer Richtung formschlüssig zueinander fixiert sind.

In den beigefügten Zeichnungen sind Ausführungsbeispiele der Erfindung dargestellt. Es zeigen:

Fig. 1 einen Schnitt entsprechend Linie I-I in Fig. 2,

Fig. 2 eine teilweise entlang der Linie II-II in Fig. 1 geschnitte Riemenscheibe,

Fig. 3 einen Schnitt durch eine weitere erfindungsgemäße Riemenscheibe entsprechend der Linie III-III in Fig. 4,

Fig. 4 eine teilweise entlang der Linie IV-IV in Fig. 3 geschnittene Riemenscheibe,

Fig. 5 ebenfalls einen Schnitt durch eine erfindungsgemäße Riemenscheibe entsprechend der Linie V-V in Fig. 6 und

Fig. 6 eine teilsweise entlang der Linie VI-VI in Fig. 5 geschnittene Riemenscheibe.

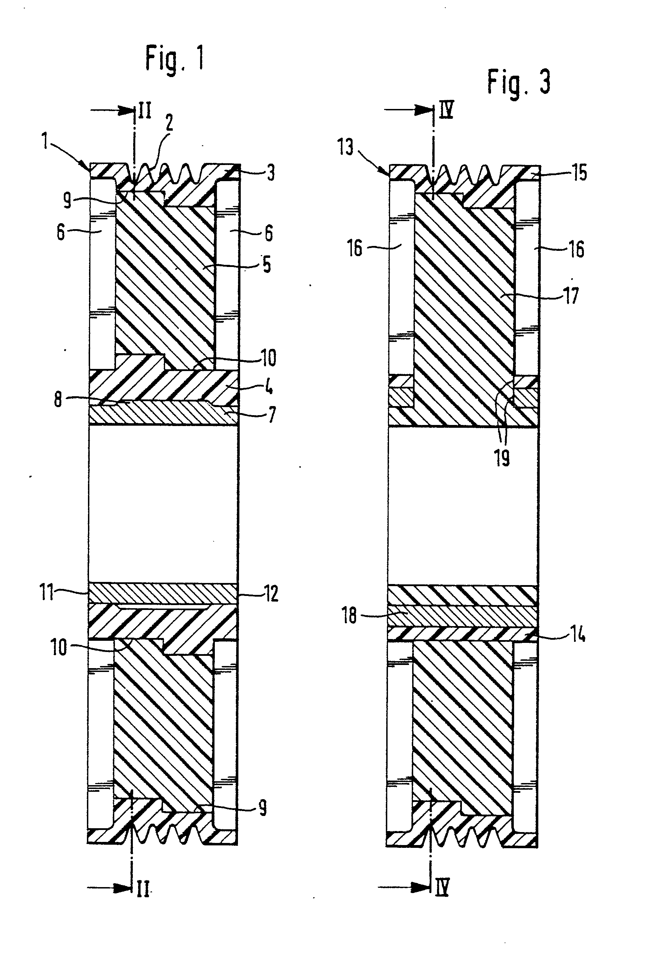

Die Fig. 1 und 2 zeigen eine erfindungsgemäße Riemenscheibe 1, die aus einem eine Lauffläche 2 für einen Vielkeilriemen tragenden Kranz 3 und einer konzentrisch in diesem angeordneten Nabe 4 sowie einem mit beiden drehfest verbundenen Dämpfungselement 5 besteht.

Beiderseits neben dem Dämpfungselement 5 sind Rippen 6 angeordnet, die in die Längsachse der Riemenscheibe 1 enthaltenen Ebenen verlaufen und den Kranz 3 und die Nabe 4 einstückig miteinander verbinden. Die Rippen 6 bewirken eine starre Abstützung des Kranzes 3 in radialer wie auch in axialer Richtung gegenüber der Nabe 4, während der Kranz 3 infolge der blattfederartigen Ausbildung der Rippen 6, die ihr geringstes Biegewiderstandsmoment um Achsen besitzen, die parallel zur Längsachse der Riemenscheibe verlaufen, in Umfangsrichtung Winkelbewegungen gegenüber der Nabe 4 ausführen kann. Dies hat zur Folge, daß das Dämpfungselement 5 beim Auftreten von Drehschwingungen verformt wird und infolge des Umstandes, daß es aus einem weichen polymeren Werkstoff besteht, die Drehschwingungen dämpft.

Infolge der blattfederartigen Ausbildung der Rippen 6 kann somit auf das bisher zwischen dem Kranz 3 und der Nabe 4 erforderliche Wälzlager verzichtet werden, ohne daß die Stabilität der Riemenscheibe oder ihre Fähigkeit, Drehschwingungen zu dämpfen, darunter leiden.

Die Nabe 4 ist in ihrer Bohrung mit einer Armierungshülse 7 versehen, welche an ihrer äußeren Mantelfläche eine Rändelung 8 aufweist. Da die Armierungshülse 7 durch Umspritzen mit der Nabe 4 verbunden ist, ist durch die Rändelung 8 eine formschlüssige Verdrehsicherung zwischen der Armierungshülse 7 und der Nabe 4 gegeben. Da die Rändelung 8 jeweils vor den Enden der Armierungshülse 7 endet, ist außerdem eine formschlüssige Halterung der Armierungshülse 7 in axialer Richtung gegeben.

Zusätzlich zu dem Stoffschluß, der zwischen dem Kranz 3 und dem Dämpfungselement 5 einerseits und dem Dämpfungselement 5 und der Nabe 4 andererseits besteht, weisen sowohl der Kranz 3 als auch die Nabe 4 Ausnehmungen 9 und 10 auf, in die das Dämpfungselement 5 mit entsprechenden Vorsprüngen eingreift, wodurch eine zusätzliche formschlüssige Verdrehsicherung zwischen dem Dämpfungselement 5 und dem Kranz 3 bzw. der Nabe 4 besteht.

Wie aus Fig. 1 ersichtlich ist, erstrecken sich die Ausnehmungen 9 und 10, die abwechselnd von der einen und der anderen Stirnfläche des Kranzes 3 bzw. der Nabe 4 ausgehen, nicht über die gesamte Länge der Berührungsflächen zwischen dem Dämpfungselement 5 und dem Kranz 3 bzw. der Nabe 4, so daß auch eine formschlüssige Fixierung in axialer Richtung zwischen den genannten Bauteilen besteht.

Da sich die Armierungshülse 7 über die gesamte Länge der Nabe 4 erstreckt, ist es nicht unbedingt erforderlich zur Herstellung einer drehfesten Verbindung zwischen der Riemenscheibe 1 und einer nicht dargestellten Welle formschlüssige Mittel wie z. B. eine Paßfederverbindung vorzusehen. Vielmehr wird eine drehfeste Verbindung zwischen der Riemenscheibe 1 und der Welle dadurch hergestellt, daß die Armierungshülse 7 mit ihren Stirnflächen 11 und 12 zwischen zwei ebenfalls nicht dargestellten Wellenabsätzen oder dergleichen reibschlüssig eingespannt wird.

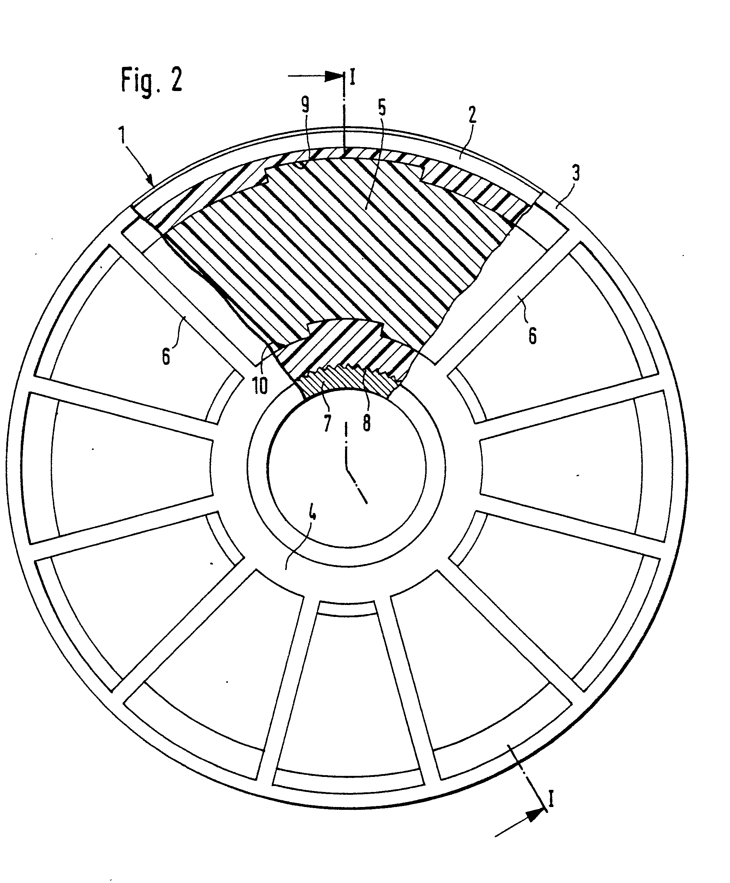

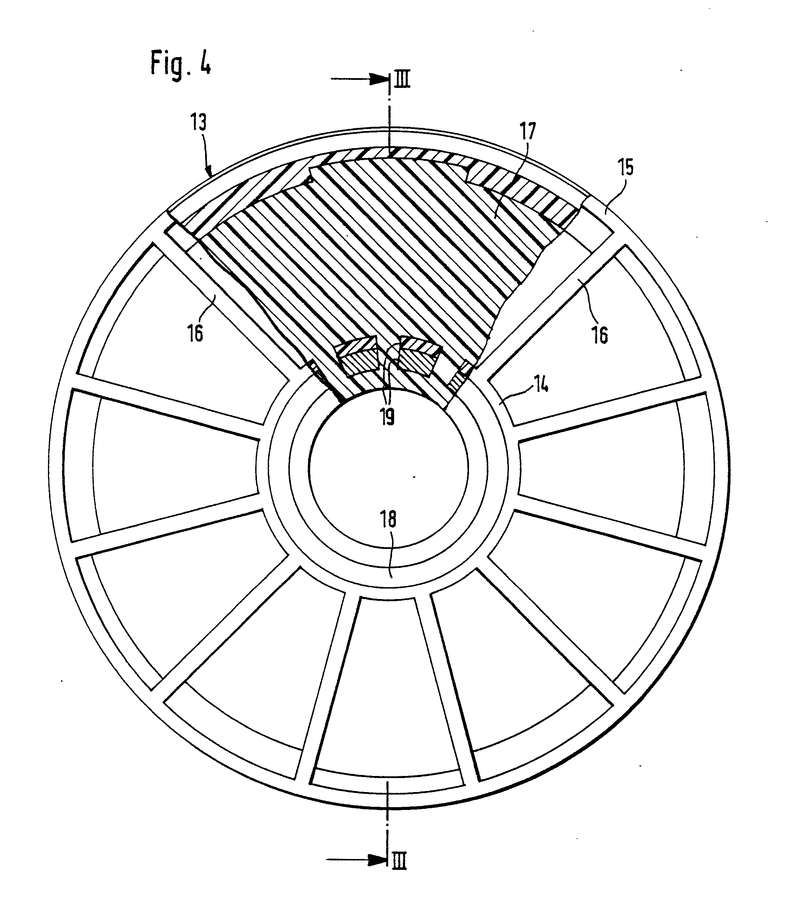

Die in den Fig. 3 und 4 dargestellte erfindungsgemäße Riemenscheibe 13 weist wieder eine Nabe 14 auf, die mit einem Kranz 15 in der zuvor beschriebenen Weise durch Rippen 16 einstückig verbunden ist, wobei zwischen der Nabe 14 und dem Kranz 15 ein Dämpfungselement 17 angeordnet ist. Die Nabe 14 ist mit einer Armierungshülse 18 versehen.

Im Unterschied zu der zuvor beschriebenen Riemenscheibe sind im Falle der Riemenscheibe 13 die Nabe 14 und die Armierungshülse 18 mit gemeinsamen Durchbrechungen 19 versehen, durch welche der weiche polymere Werkstoff des Dämpfungselements 17 in die Bohrung der Armierungshülse 18 tritt und deren Bohrungswandung vollständig bedeckt.

Aufgrund der Nachgiebigkeit des weicheren polymeren Werkstoffs können Toleranzen des Wellendurchmessers überbrückt werden. Die drehfeste Befestigung der Riemenscheibe auf einer nicht gezeigten Welle erfolgt in der zuvor beschriebenen Weise.

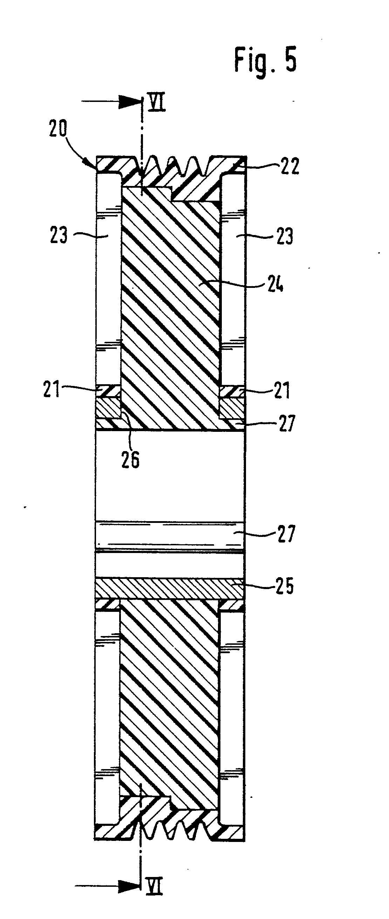

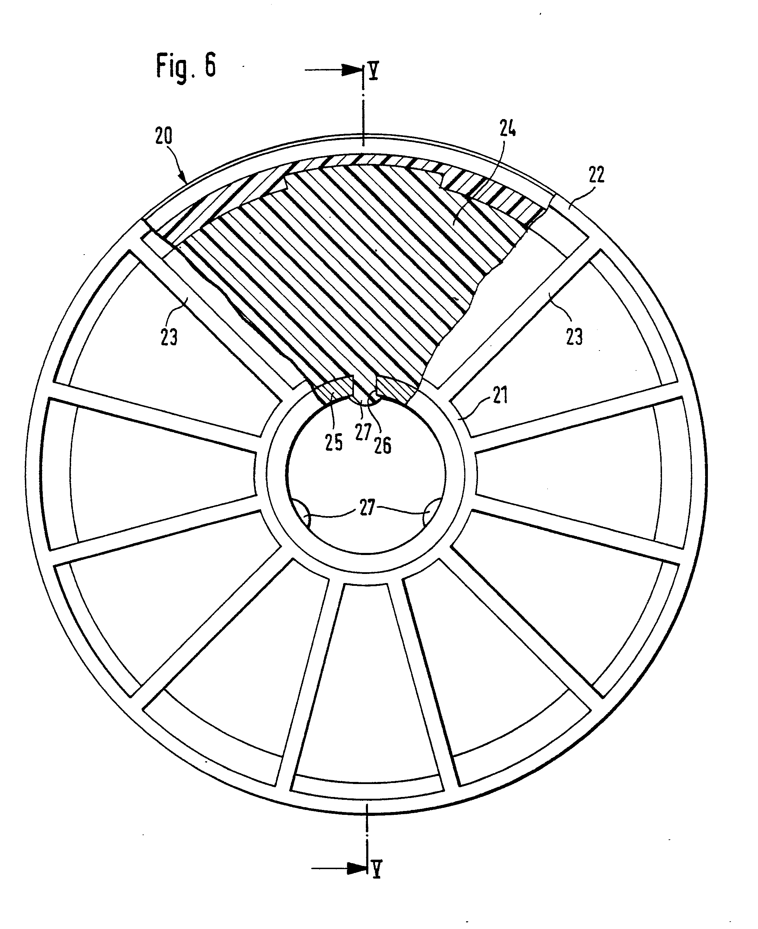

Auch die in den Fig. 5 und 6 dargestellte erfindungsgemäße Riemenscheibe 20 besitzt eine Nabe 21 und einen Kranz 22, welche durch Rippen 23 einstückig miteinander verbunden sind, wobei zwischen der Nabe 21 und dem Kranz 22 ein Dämpfungselement 24 angeordnet ist. Die Nabe 21 ist wieder mit einer metallischen Armierungshülse 25 versehen.

Im Unterschied zu der zuvor beschriebenen Ausführungsform wird die Nabe 21 durch zwei Ringe gebildet, in welchen die Rippen 23 enden und deren Breite der Erstreckung der Rippen 23 in Richtung der Längsachse der Riemenscheibe 20 entspricht. Die Armierungshülse 25 weist Durchbrechungen 26 auf, durch welche der weiche polymere Werkstoff des Dämpfungselementes 24 in die Bohrung der Armierungshülse 25 tritt, wo er nicht deren gesamte Bohrungswandung bedeckt, sondern lediglich Zentriernasen 27 bildet, durch welche die Riemenscheibe 20 auf einer nicht gezeigten Welle abgestützt wird. Infolge der Nachgiebigkeit der Zentriernasen 27 können Toleranzen des Wellendurchmessers ausgeglichen werden.

Obwohl in den Ausführungsbeispielen ausschließlich Riemenscheiben für Vielkeilriemen gezeigt sind, kann die erfindungsgemäße. Riemenscheibe Laufflächen für beliebige andere Riemenbauarten besitzen.

Ebenso ist die in den Ausführungsbeispielen ausschließlich gezeigte Anordnung der Rippen neben dem Dämpfungselement nur beispielhaft zu verstehen. Im Rahmen der Erfindung können sich die Rippen durchaus auch teilweise oder vollständig durch das Dämpfungselement hindurch erstrecken.

## Ansprüche

1. Riemenscheibe, bestehend aus einem die Lauffläche für den Riemen tragenden äußeren Kranz und einer konzentrisch in diesem angeordneten Nabe sowie einem drehfest mit beiden verbundenen Dämpfungselement, wobei der Kranz in radialer und axialer Richtung gegenüber der Nabe starr abgestützt ist, während er in Umfangsrichtung gegenüber der Nabe winkelbeweglich ist, und wobei der Kranz und die Nabe aus einem harten und das Dämpfungselement aus einem weicheren polymeren Werkstoff bestehen, **dadurch gekennzeichet, daß** der Kranz (3, 15, 22) durch blattfederartige Rippen (6, 16, 23) einstückig mit der Nabe (4, 14, 21) verbunden ist, die ihr geringstes Biegewiderstandsmoment um parallel zur Längsachse der Riemenscheibe (1, 13, 20) verlaufende Achsen aufweisen.

2. Riemenscheibe nach Anspruch 1, **dadurch gekennzeichnet, daß** das Dämpfungselement (5, 17, 24) im wesentlichen ringförmig ausgebildet ist und die Rippen (6, 16, 23) auf wenigstens einer Seite des Dämpfungselementes (5, 17, 24) neben diesem angeordnet sind.

3. Riemenscheibe nach Anspruch 1 oder 2, **dadurch gekennzeichnet, daß** in der Bohrung der Nabe (4, 14, 21) eine metallische Armierungshülse (7, 18, 25) vorgesehen ist, welche vorzugsweise formschlüssig durch Umspritzen mit der Riemenscheibe (1, 13, 20) verbunden ist.

4. Riemenscheibe nach Anspruch 3, **dadurch gekennzeichnet, daß** sich die Armierungshülse (7, 18, 25) über die gesamte Länge der Nabe (4, 14, 21) erstreckt.

5. Riemenscheibe nach einem der Ansprüche 1 bis 4, **dadurch gekennzeichnet, daß** die Nabe (14, 21) und/oder die Armierungshülse (18, 25) wenigstens eine, gegebenenfalls gemeinsame Durchbrechung (19, 26) aufweisen, durch welche der weichere polymere Werkstoff in die Bohrung der Armierungshülse (18, 25) tritt.

6. Riemenscheibe nach Anspruch 5, **dadurch gekennzeichnet,** daß der weichere polymere Werkstoff die gesamte Bohrungswandung der Armierungshülse (18) bedeckt.

7. Riemenscheibe nach Anspruch 5, **dadurch gekennzeichnet,** daß der weichere polymere Werkstoff durch wenigstens drei Durchbrechungen (26) zur Bildung von Zentriernasen (27) in die Bohrung der Armierungshülse (25) tritt.

8. Riemenscheibe nach einem der Ansprüche 1 bis 7, **dadurch gekennzeichnet,** daß die Trennfläche zwischen Kranz (3, 15, 22) und Dämpfungselement (5, 17, 24) und/oder die Trennfläche zwischen Dämpfungselement (5, 17, 24) und Nabe (4, 14, 21) derart unrund ausgebildet ist, daß zwischen den jeweiligen Teilen eine formschlüssige Verdrehsicherung besteht.

9. Riemenscheibe nach einem der Ansprüche 1 bis 8, **dadurch gekennzeichnet,** daß die Trennfläche zwischen Kranz (3, 15, 22) und Dämpfungselement (5, 17, 24) und/oder die Trennfläche zwischen Dämpfungselement (5, 17, 24) und Nabe (4, 14, 21) derart ausgebildet ist, daß die jeweiligen Teile in axialer Richtung formschlüssig zueinander fixiert sind.

Fig. 1

Fig. 3

Fig. 2

Fig. 4

0 218 078

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 013 142 (HAGG) <br> * Zeilen 5-7; Figuren 3-5 * | 1,2 | F 16 H 55/48 <br> F 16 F 15/12 |
| | --- | | |
| D,A | DE-A-3 402 001 (DAIMLER-BENZ) <br> * Seite 6; Figur * | 1 | |
| | --- | | |
| A | EP-A-0 043 687 (GATES) | | |
| | --- | | |
| A | US-A-4 177 685 (DE LANLEY) | | |
| | --- | | |
| A | GB-A- 243 518 <br> (THOMSON-HOUSTON) | | |
| | --- | | RECHERCHIERTE SACHGEBIETE (Int. Cl.4) |
| A | DE-A-3 309 422 (WALKER) | | F 16 F 55/00 <br> F 16 F 15/00 |
| | --- | | |
| A | US-A-2 088 979 (G.E. STANLEY) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 05-01-1987 | FLORES E. |